(19) Europäisches Patentamt

European Patent Office

Office européen des brevets

(11) **EP 1 617 207 A2**

(12) **EUROPEAN PATENT APPLICATION**

(43) Date of publication:
18.01.2006 Bulletin 2006/03

(51) Int Cl.:
*G01N 21/64* (2006.01)   *G01N 21/76* (2006.01)
*G01N 21/25* (2006.01)

(21) Application number: 05023153.9

(22) Date of filing: 21.07.2000

(84) Designated Contracting States:
AT BE CH CY DE DK ES FI FR GB GR IE IT LI LU
MC NL PT SE

(30) Priority: 21.07.1999 US 144891 P

(62) Document number(s) of the earlier application(s) in
accordance with Art. 76 EPC:
00948839.6 / 1 221 038

(71) Applicant: **Applera Corporation**
**Bedford, MA 01730 (US)**

(72) Inventors:
• **Gambini, Michael, R.**
  **Bolton 01740**
  **Massachusetts (US)**
• **Voyta, John, C.**
  **Sudbury 01776**
  **Massachusetts (US)**
• **Atwood, John**
  **deceased (US)**
• **Desimas II, Bruce, E.**
  **Danville 94526**
  **California (US)**

• **Lakatos, Edward**
  **Bethel 06801**
  **Connecticut (US)**
• **Levi, Jeff**
  **Trumbull 06611**
  **Connecticut (US)**
• **Metal, Israel**
  **Flushing 11367**
  **New York (US)**
• **Sabak, George**
  **Monroe 06468**
  **Connecticut (US)**
• **Wang, Yong Dong**
  **Wilton 06897**
  **Connecticut (US)**

(74) Representative: **Williams, Gareth Owen**
  **Marks & Clerk,**
  **66-68 Hills Road**
  **Cambridge CB2 1LA (GB)**

Remarks:
This application was filed on 24-10-2005 as a
divisional application to the application mentioned
under INID code 62.

(54) **Luminescence detection workstation**

(57) A luminescence detecting apparatus comprising a chamber (60) containing a collimator (110), a Fresnel field lens (120), a filter (130), and a camera lens (140), whereupon a focused image is created by the optics onto a charge coupled device camera (70).

FIG.2

EP 1 617 207 A2

Description

## BACKGROUND OF THE INVENTION

This application claims the benefit from Provisional Application Serial No. 60/144,891, filed July 21, 1999. The entirety of that provisional application is incorporated herein by reference.

### Field of the Invention

This invention relates to the field of apparatus and methods for detecting and quantifying light emissions, and more particularly, to detecting and quantifying light emitted from luminescent-based assays. Still more particularly, this invention pertains to apparatus and methods for detecting and quantifying luminescence such as bioluminescence and/or chemiluminescence from luminescent assays as an indicator of the presence or amount of a target compound. Preferred embodiments of the invention include as an imaging device a charge coupled device (CCD) camera and a computer for analyzing data collected by the imaging device. Further preferred embodiments include the capacity for use in high throughput screening (HTS) applications, and provide for robot handling of assay plates.

### Description of the Related Art

The analysis of the luminescence of a substance, and specifically the analysis of either bioluminescence (BL) or chemiluminescence (CL), is becoming an increasingly useful method of making quantitative determinations of a variety of luminescent analytes.

Recently, methods have been introduced that utilize luminescence detection for quantitatively analyzing analytes in an immunoassay protocol. Such luminescence immunoassays (LIA) offer the potential of combining the reaction specificity of immunospecific antibodies or hybridizing nucleic acid sequences and similar specific ligands with the high sensitivity available through light detection. Traditionally, radioactive reagents have been used for such purposes, and the specificity and sensitivity of LIA reagents is generally comparable to those employing traditional radiolabelling. However, LIA is the preferred analytical method for many applications, owing to the nontoxic nature of LIA reagents and the longer shelf lives of LIA reagents relative to radioactive reagents.

Among other luminescent reagents, chemiluminescent compounds such as 1,2-dioxetanes, developed by Tropix, Inc. and other stable chemiluminescent molecules, such as xanthan esters and the like, are in commercial use. These compounds are triggered to release light through decomposition triggered by an agent, frequently an enzyme such as alkaline phosphatase, which is present only in the presence, or specific absence, of the target compound. The detection of light emission is a qualitative indication, and the amount of light emitted can be quantified as an indicator of the amount of triggering agent, and therefore target compound, present. Other well known luminescent compounds can be used as well.

Luminescent release may sometimes be enhanced by the presence of an enhancement agent that amplifies or increases the amount of light released. This can be achieved by using agents which sequester the luminescent reagents in a microenvironment which reduces suppression of light emission. Much biological work is done, perforce, in aqueous media. Water typically suppresses light emission. By providing compounds, such as water soluble polymeric onium salts (ammonium, phosphonium, sulfonium, etc.) small regions where water is excluded that may sequester the light emitting compound may be provided.

The majority of instrumentation used to monitor light emitting reactions (luminometers) use one or more photomultiplier tubes (PMTs) to detect the photons emitted. These are designed to detect light at the low light levels associated with luminescent reactions. The rate at which a PMT based microplate luminometer can measure signal from all wells of the plate is limited by the number of PMTs used. Most microplate luminometers have only one PMT so a 384 well plate requires four times longer than is required to read a 96-well plate.

The nature of biological research dictates that numerous samples be assayed concurrently, e.g., for reaction of a chemiluminescent substrate with an enzyme. This is particularly true in gene screening and drug discovery, where thousands of samples varying by concentration, composition, media, etc. must be tested. This requires that multiple samples be reacted simultaneously, and screened for luminescence. However, there is a need for high speed processing, as the chemiluminescence or bioluminescence may diminish with time. Simultaneously screening multiple samples results in improved data collection times, which subsequently permits faster data analysis, and contingent improved reliability of the analyzed data.

In order for each specific sample analyte's luminescence to be analyzed with the desired degree of accuracy, the light emission from each sample must be isolated from the samples being analyzed concurrently. In such circumstances, stray light from external light sources or adjacent samples, even when those light levels are low, can be problematic. Conventional assays, particularly those employing high throughput screening (HTS) use microplates, plastic trays provided with multiple wells, as separate reaction chambers to accommodate the many samples to be tested. Plates currently in use include 96- and 384-well plates. In response to the increasing demand for HTS speed and miniaturization, plates having 1,536 wells are being introduced. An especially difficult impediment to accurate luminescence analysis is the inadvertent detection of light in sample wells adjacent to wells with high signal intensity. This phenomenon of light measurement interference by adjacent samples is termed 'crosstalk' and can lead to assignment of erroneous values to samples in the adjacent wells if the signal in those wells is actually weak.

Some previously proposed luminometers include those described in U.S. Patent No. 4,772,453; U.S. Patent No. 4,366,118; and European Patent No. EP 0025350. U.S. Patent No. 4,772,453 describes a luminometer having a fixed photodetector positioned above a platform carrying a plurality of sample cells. Each cell is positioned in turn under an aperture through which light from the sample is directed to the photodetector. U.S. Pat. No. 4,366,118 describes a luminometer in which light emitted from a linear array of samples is detected laterally instead of above the sample. Finally, EP 0025350 describes a luminometer in which light emitted through the bottom of a sample well is detected by a movable photodetector array positioned underneath the wells.

Further refinements of luminometers have been proposed in which a liquid injection system for initiating the luminescence reaction just prior to detection is employed, as disclosed in EP 0025350. Also, a temperature control mechanism has been proposed for use in a luminometer in U.S. Patent No. 4,099,920. Control of the temperature of luminescent samples may be important, for example, when it is desired to incubate the samples at an elevated temperature.

A variety of light detection systems for HTS applications are available in the market. These include the LEADseeker™ from Amersham/Pharmacia, the ViewLux™ offered by PerkinElmer and CLIPR™ from Molecular Devices. These devices are all expensive, large dimensioned (floorbased models), exhibit only limited compatibility with robotic devices for plate preparation and loading, have a limited dynamic range, and/or use optical detection methods which do not reduce, or account for, crosstalk. The optical systems used are typically complex teleconcentric glass lens systems, which may provide a distorted view of wells at the edges of the plates, and the systems are frequently expensive, costing in excess of $200,000.00. Perhaps the most popular detection apparatus is the TopCount™, a PMT-based detection system from Packard. Although the TopCount™ device has a desirable dynamic range, it is not capable of reading 1,535 well plates, and it does not image the whole plate simultaneously.

Crosstalk from adjacent samples remains a significant obstacle to the development of improved luminescence analysis in imaging-based systems. This can be appreciated as a phenomenon of simple optics, where luminescent samples produce stray light which can interfere with the light from adjacent samples. Furthermore, the development of luminometers capable of detecting and analyzing samples with extremely low light levels are particularly vulnerable to crosstalk interference.

## SUMMARY OF THE INVENTION

In order to meet the above-identified needs that are unsatisfied by the prior art, it is a principal object and purpose of the present invention to provide a luminescence detecting apparatus that will permit the analysis of luminescent samples. It is a further object of the present invention to provide a luminescence detecting apparatus capable of simultaneously analyzing a large number of luminescent samples. In a preferred embodiment of the present invention, a luminescence detecting apparatus is provided that simultaneously analyzes multiple samples held in wells, where the well plates contain as many as 1,536 wells. The present invention further includes robot handling of the multiple well trays during analysis.

It is yet another object of the present invention to provide a luminescence detecting apparatus capable of analyzing low light level luminescent samples, while minimizing crosstalk from adjacent samples, including and especially minimizing crosstalk from adjacent samples with higher light level output than the sample to be analyzed.

The apparatus of this invention employs a Fresnel lens arrangement, with a vertical collimator above the well plate, with dimensions to match the number of wells. Thus, a 1,536-well plate will employ a dark collimator above the plate with 1,536 cells in registry with the wells of the plate. Fixed above the collimator is a Fresnel lens, which refracts the light such that the view above the lens appears to be looking straight down into each well, regardless of its position on the plate, even at the edges.

Above the Fresnel lens is a CCD camera arranged so as to take the image of the entire plate at one time, viewing through a 35 mm wide angle lens, to give whole plate imaging on a rapid basis. Between the CCD and Fresnel/collimator is a filter, typically arrayed on a filter wheel, disposed at an angle to the lens. The filter is selected to permit the passage of the specific wavelength of the light emitted, and reflect or absorb all others. Several filters may be provided on the wheel, to permit sequential detection of light emitted from multiple reagents emitting light at different wavelengths.

The samples are fed to the optical detection platform through a loading device designed to work well with robotic and automated preparation systems. The well-plate, with reaction mixture already provided, is placed on a shuttle by a human, or preferably, robot. Alignment of the plate on the shuttle may be relatively coarse, notwithstanding the requirement for tight tolerances to match the collimator grid array. As the shuttle leaves the loading position, a resilient means urges the plate into strict conformal alignment. The shuttle positions the plate under an overhead injection bar, which may accommodate up to sixteen wells in a column at one time. If not previously added, a triggering agent or luminescent reagent is added to the sample wells, and the plate indexes forward to load the next column of wells across the plate. The shuttle then advances through a door into the sample chamber, and the plate is aligned with the collimator and the Fresnel lens. Since many reactions proceed better, or only, at elevated temperatures, the sample chamber is insulated, and provided with heating means, for heating the air in or provided to the chamber. In order to maintain temperature in the chamber close to room temperature and to accurately control temperature, the chamber may also be provided with a heat exchanger.

The light emission from the entire multiple well plate is imaged at once, with subsequent imaging through a different filter if multiple wavelengths are employed. The signal obtained is processed to further reduce crosstalk reduced by the collimator and the presence and amount of luminescence is quickly detected and calculated by a personal computer using automated software. Data is then reported as intensity per well or further analyzed relative to specific assay standards.

## BRIEF DESCRIPTION OF THE DRAWINGS

A more complete appreciation of the invention and many of the attendant advantages thereof will be readily obtained as the same becomes better understood by reference to the following detailed description when considered in connection with the accompanying drawings, wherein:

Figure 1 is a cross section of a preferred embodiment of a luminescence detecting apparatus according to the present invention;
Figure 2 is a detailed cross section of the optics of a luminescence detecting apparatus according to the present invention.
Figure 3 is a cross-sectional view of the plate transport system of the invention.
Figure 4 is a perspective illustration of the injector arm assembly of the invention.
Figure 5 is an exploded view of the filter wheel assembly.
Figure 6 is a cross-sectional view of the optical housing.
Figure 6A is a plan view of a robotic mechanism of the invention.
Figure 7 is a flow chart illustration of the processing method of the invention.
Figures 8-15 are illustrations of the results obtained using the invention in Examples 1-10, respectively.

## DESCRIPTION OF THE PREFERRED EMBODIMENTS

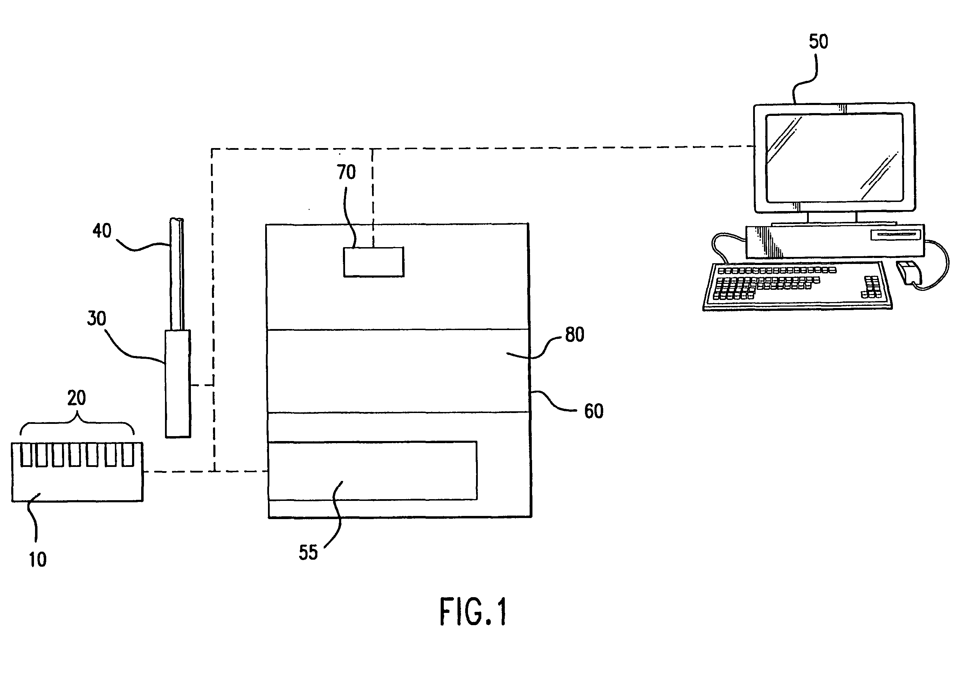

Referring now to the drawings, wherein like reference numerals designate identical or corresponding parts throughout the several views, and more particularly to Figure 1 thereof, a preferred embodiment of the luminescence detecting apparatus of the present invention uses a shuttle or tray to carry a micro plate (plate) **10** comprising a plurality of sample wells **20** which may in the preferred embodiment number as many as 1,536 or more. Persons of ordinary skill in the relevant art will recognize that the number of sample wells **20** is limited only by the physical dimensions and optical characteristics of the luminometer elements, and not by the technology of the present invention. The sample wells **20** may be filled with analyte manually, or robotically prior to delivery to the inventive apparatus. Agents necessary for chemiluminescence may be filled automatically via the injector **30,** to which analyte is supplied through an array of supply tubes **40** or prior to placing the plate ont he tray. Typically, the sample wells will contain chemiluminescent reagents. These reagents emit light at intensities proportional to the concentration of analyte in the sample. This light can be very low intensity and requires an instrument with sufficient sensitivity to achieve the desired detection limits.

The operation of injector **30** is controlled by central processor **50,** which in the preferred embodiment may control the operation of all elements of the luminometer of the present invention. Data collection, analysis and presentation may also be controlled by processor **50.** Further in a preferred embodiment of the present invention, the injector **30** may also be used to add buffer solutions to the analytes and also to add reagents that enable "glow" and/or "flash" luminescence imaging, that is sustained or brief, intense emission, respectively, all under control of central processor **50.**

After the analytes are placed in the sample wells **20,** plate **10** is placed in sample chamber **55,** which is located in optical chamber **60** at a fixed focal distance from and directly under the charge-coupled device (CCD) camera **70,** in order to permit the CCD camera to image the luminescent sample accurately. The sample chamber **55** is preferably capable of precise temperature control, as many luminescent reagents and specific luminescent reactions are temperature dependent. Temperature control is provided by central processor **50,** which can vary the temperature for each individual sample plate **10,** as central processor **50** controls the movement and injection of the sample wells **20** in each sample tray **10.** In a preferred embodiment of the luminometer of the present invention, central processor **50** also controls an industrial robot (not shown) which performs the activities involving analyte handling in the luminometer of the present invention.

With the plate **10** placed in the sample chamber **55,** the optics **80** deliver the image of the complete microplate **10** as a single image to the CCD camera **70.**

Although the operation of the luminometer of this invention is an integral, continuous practice, and all elements of the luminometer cooperate together to provide precise, accurate and reliable data, the invention may be more easily understood by reference to three separate, integrated systems, the optics system, the mechanical system and the processing system. Each is discussed in turn, with a discussion of examples of the operation as a whole to follow.

## Optics System

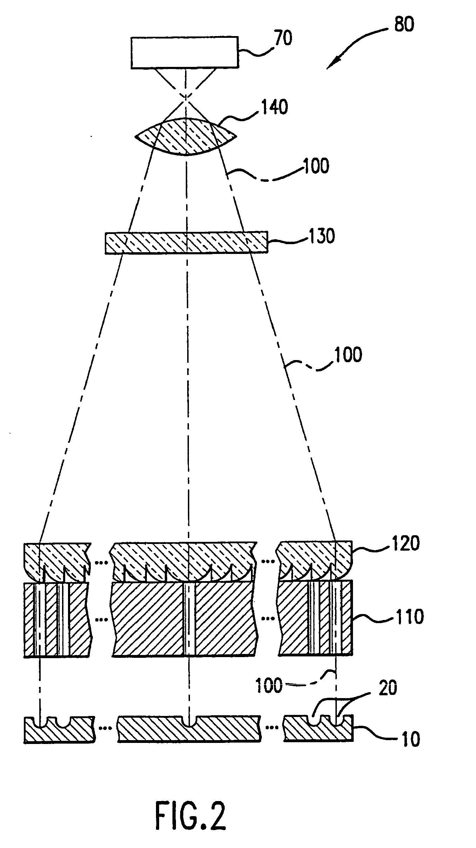

Turning now to Figure 2, the optics **80** are shown in further detail. Luminescent emission **100** from the analyte in plate well **20** located in the plate **10** travels first through dark collimator **110,** which permits only parallel and semi-parallel light rays to exit the sample wells **20** for eventual imaging by the CCD camera **70.** The effect of collimation assists with the prevention of stray light from the sample wells **20** and with the elimination of crosstalk between luminescent samples. The collimator **110** may be sealably engaged, or in close proximity, to the sample tray **10,** to enhance the restriction of stray light from the samples. Each well **10** is in strict registration and alignment with a corresponding grid opening in collimator **110**. From the collimator **110,** the luminescent radiation passes through a Fresnel field lens **120**, which focuses the light toward filter **130**. In a preferred embodiment of the present invention, the collimator **110** and Fresnel field lens **120** are packaged in a cassette that can be changed by the user. Such an equipment change may be necessitated by varying optical characteristics of different analytes and different well distributions in plates.

The use of a Fresnel field lens is preferable to alternative optical devices for several reasons. Initially, improvements in design and materials have capitalized on the superior optical capabilities of the Fresnel lens, while virtually eliminating its once inherent limitations. Today, many Fresnel lenses are made of molded plastic, creating an almost flawless surface with very little scatter light. The elimination of scatter light is an important element of eliminating crosstalk between adjacent samples in the luminometer of the present invention. Furthermore, improved types of plastics commonly employed in the manufacturing of Fresnel lenses and other optical devices have optical qualities equivalent to ground glass lenses.

Using high tech processes such as computer-controlled diamond turning, complex aspheric surfaces can be cut into a long lasting mold for casting Fresnel lenses. In this manner, Fresnel lenses can be manufactured to produce the precise optical imaging effect that is most efficient for a charge coupled device camera, as in the present invention. Also, Fresnel lenses offer an advantage over conventional lenses in that they can be molded flat and very thin. Because of the shape of the Fresnel lens, it can easily be integrated directly into the housing of the luminometer, enhancing the light-tight properties necessary for accurate imaging of low light samples. Furthermore, Fresnel lenses are much less expensive than comparable conventional glass lenses.

As with any other lens, the total beam spread from a Fresnel lens depends on the size of the source in relation to the focal length of the lens. Smaller sources, such as luminescent assay samples, and longer focal lengths produce more compact beams. Since there are practical limitations to minimizing the geometry and dimensions of the optics **80** in the luminometer of the present invention, the use of Fresnel field lens **120** provides the greatest opportunity for fine-tuned optics. The emissions from plate **10** pass through lens **120,** and are refracted such that the image obtained at CCD **70** appears to look directly downward into all wells, even laterally displaced (edge) ones. This feature is typically called "telecentric."

Further in a preferred embodiment of the present invention, the filter **130** may be configured on a wheel, wherein different filter elements may occupy different portions of the wheel, depending on the luminescent characteristics of the sample being analyzed. Filter **130** is preferably inclined at an angle of 20° - 30° relative to the CCD, so that stray reflected light is reflected outside the field of view. Specifically, the filter wheel **130** permits the selection of different wavelength ranges, which not only permit high quality imaging, but may be used to separate the emissions of different reagents emitting at different wavelengths. Again, the filter wheel **130** is controlled by central processor **50,** in coordination with central processor **50**'s control of the individual sample wells **20** in the sample plate **10**. In many assays, such as those addressed in pending U.S. Patent Application Serial No. 08/579,787, incorporated by reference herein, multiple luminescent reagents, which emit at different wavelengths, are employed in a single well. Using multiple filters, each can be imaged in turn, and the true concentration can be calculated from the data set resulting using pre-stored calibration factors. Filter **130** is preferably provided with an infrared (IR) filter operating in conjunction with the selected bandpass, or as an independent element. Applicants have discovered that stray IR radiation, resulting from the plate phosphorescence, resulting in abnormally high backgrounds. An IR filter suppresses this.

From the filter wheel **130,** the sample-emitted light passes through camera lens **140,** which in the preferred embodiment is a large aperture, low distortion, camera lens. Camera lens **140** focuses the image of the sample on the CCD chip **70**. In the preferred embodiment of the present invention, CCD camera **70** is a cooled, low noise, high resolution device. The lens is preferably a 35 mm wide angle lens with a low light level (F 1.4) large aperture character. Magnification of 3-6, preferably about 5.5, is preferred. In preferred embodiments CCD camera **70** is provided with an anti-blooming CCD chip, to enhance dynamic range, which is about $10^5$ in the claimed invention, referred to as the NorthStar™ luminometer. Blooming occurs when a single pixel is overloaded with light and its photoelectrons overflow the CCD device well capacity, obliterating surrounding pixels. Further in the preferred embodiment of the luminometer of the present invention, the selected CCD camera includes a liquid cooled thermoelectric (Peltier) device providing cooling of the CCD to approximately -35 °C, and the CCD has 1280 X 1024 pixels, each of which are 16 $\mu$m square, producing a total active area of 20.5 mm X 16.4 mm. The quantum efficiency averages 15% over the range from 450 nanometers to 800 nm. The output is digitized to 16 bit precision and pixels can be "binned" to reduce electronic noise.

By using the features disclosed herein, the luminometer of the present invention has a spatial resolution capable of providing high quality imaging of high density sample trays. The noise performance and CCD temperature are designed to provide the desired detection limit.

## **Mechanics**

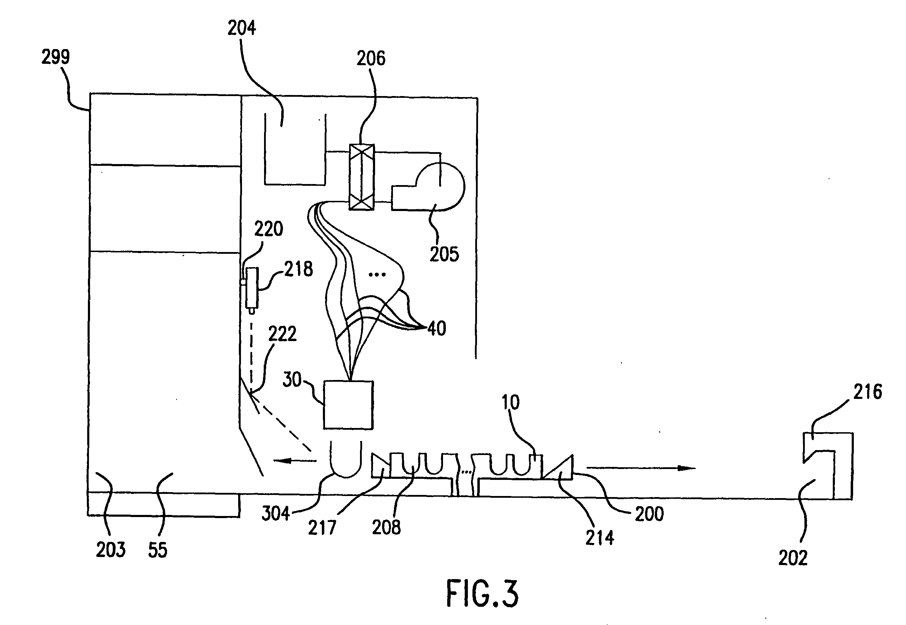

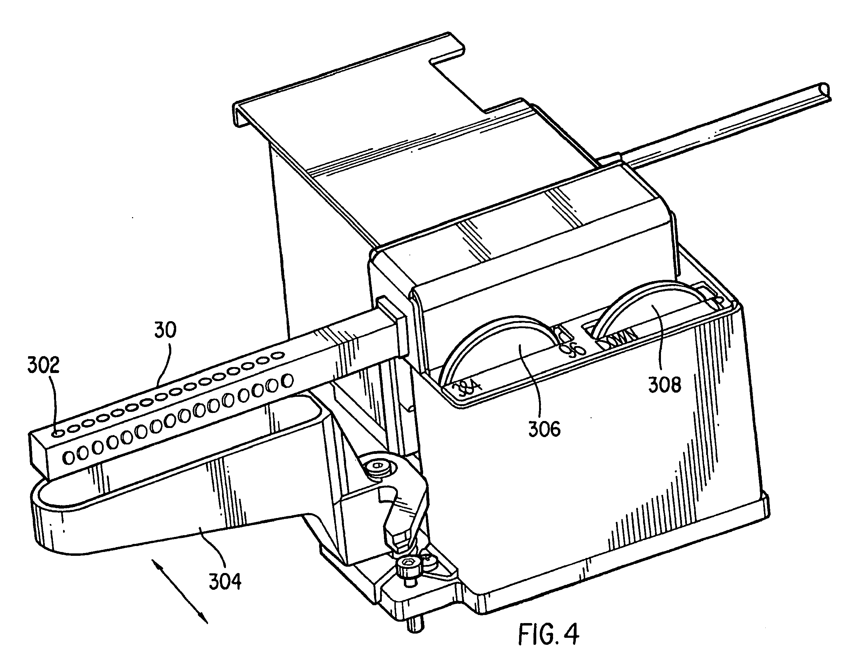

The mechanical systems of the luminometer workstation of this invention are designed to achieve automated, high throughput precise delivery of microplates in registration with a collimator 110 so as to be read by the CCD Camera **70**. To this end, as shown in Figure 3, a cross-section of the inventive luminometer shuttle **200** translates from a load position **202**, where plates **10** are loaded on to the shuttle, preferably by a robotic device such as robot arm, and the shuttle **200** then translates towards sample chamber **55,** to read position **203**. Shuttle **200** is caused to translate by a conventional stepper motor (not pictured). As shuttle **200** advances toward sample chamber **55**, it may stop underneath injector **30**. Injector **30** is more fully illustrated below in Figure 4. Referring still to Figure 3, injector 30 delivers fluid reagents drawn from reservoir **204**. Syringe pump **205** draws the fluid reagents from reservoir **204**, and pumps the fluid to the injector tubes **40**. Two way valve **206** controls the passage of the fluid drawn by syringe pump **205** from reservoir **204** and pumped by syringe pump **205** to the supply tubes **40**. In actual practice, there are as many injector tubes **40** as injection ports being used, and multiple syringe pumps **205** are also used. As will be shown below in Figure 4, injector **30** has up to sixteen injection ports **302**. The plates used in conjunction with the luminometerwhen injection is used are typically prepared with up to sixteen wells in a column. As the shuttle **200** advances plate **10** underneath injector **30,** shuttle **200** stops so that the first column **208** of wells is directly aligned under injector **30.** Precise amounts of analyte are delivered to the first set of wells, and shuttle **200** indexes forward one column, so as to inject reagent into the second column of wells **210**. This process is repeated until all wells are filled. Thereafter, shuttle **200** advances forward into sample chamber **55** through hinged door **212**. In the alternative, door **212** may be a guillotine door or similar type of closing mechanism. The wells of plate **10** are then read in sample chamber **55.** Upon completion of reading, shuttle **200** translates back to load position **202**.

Before shuttle **200** advances to the injection bar, it may be necessary to fully prime the tube with fluid, so as to provide for precise delivery into the plate. Trough **304** swings out from its storage position parallel to the direction of travel of shuttle **200,** shown by an arrow, to a position directly underlying the injector **30,** perpendicular to the direction of travel. Fluid in the injector and tubes **204** are delivered into trough **304,** and removed by suction. Trough **304** then returns to its rest position, parallel to, and away from, the direction of travel of the shuttle **200,** when the shuttle is moved toward the sample chamber **55**. On its return trip to load position **202,** locator **214** on shuttle **200** is engaged by cam **216.** Locator **214** is mounted on a resilient means, such that when engaged by cam **216,** the locator **214** recesses away from plate **10.** This permits removal of plate **10,** and delivery from a robotic arm or other source of a fresh plate **10,** without the requirement of precise location. As shuttle **200** moves away from load **202,** locator **214** is urged forward, firmly locating plate **10** in place. Plate **10** is held against shoulder **217** by the resilient urging of locator **214**.

It is important that each plate be precisely identified, so that results are correlated with the correct test samples. In most HTS laboratories, most microplates are labeled with a unique "bar code." The label is often placed on the surface perpendicular to the plane of the plate itself. To permit precise identification of each plate, a bar code reader **218** is mounted on the luminometer housing generally indicated at **299** and directly above the door **212**, for example on an arm or flange **220**. Bar code reader **218** is focused on a mirror **222** which in turn permits reading directly off the front or leading edge of plate **10** as it approaches on shuttle **200**. Thus, before each plate arrives in the sample chamber, its identity has been precisely recorded in processor **50,** and the results obtained can be correlated therewith. Persons of ordinary skill in the art will recognize that a variety of configurations of alignment and placement of both bar code reader **218** and mirror **222** will result in the desired identification.

As more clearly shown in Figure 4, injector **30** may be precisely located by operation of actuator wheel **306,** provided with positions corresponding to the total number of wells on the plates being assayed. Similarly, the vertical position, to account for the different thicknesses of the plate, may be controlled by wheel **308.** Given the simple translation movement of shuttle **200,** and the precise locating and identification of each plate carried, rapid cycling of micro-plate test plates into and out of sample chamber **55** can be effected.

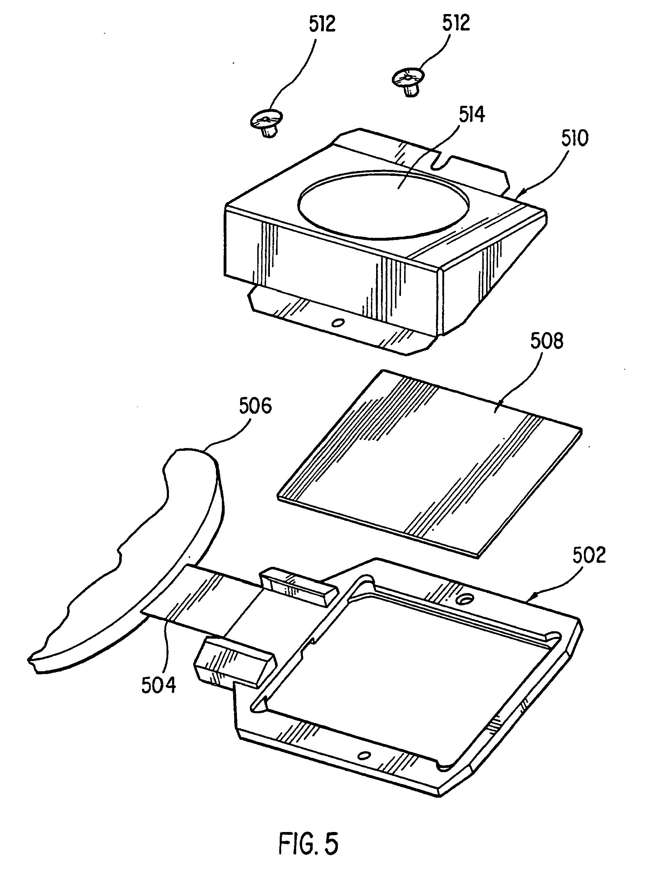

As described above in connection with the optics system of the invention, a filter is provided which includes or reflects passage of light other than light falling within the selected wavelength of the luminescent emitter in use. The filter assembly is illustrated in exploded format in Figure 5. Filter frame **502** is supported by arm **504** which is connected to the hub of the filter wheel **506.** Multiple different filters may be provided on a single wheel. The filter itself, **508,** is securely mounted on the frame and held there by cover **510,** which is secured to frame **502** by grommets, screws or other holding devices **512.** As noted, filter wheel is positioned so as to hold filter **508** in frame **502** at in incline with respect to collimator **110,** of about 22° nominally, so as to direct any reflections outside the field of view. Light passes through the filter opening **514,** in alignment with camera lens **140** and CCD camera **70.** As further noted above, filter **508** preferably includes an infrared block, either as a component of the filter itself, or as a component provided in addition to the filter for the measured light. An IR block is of value to prevent infrared emissions caused by extraneous radiation from altering the image received by the CCD camera.

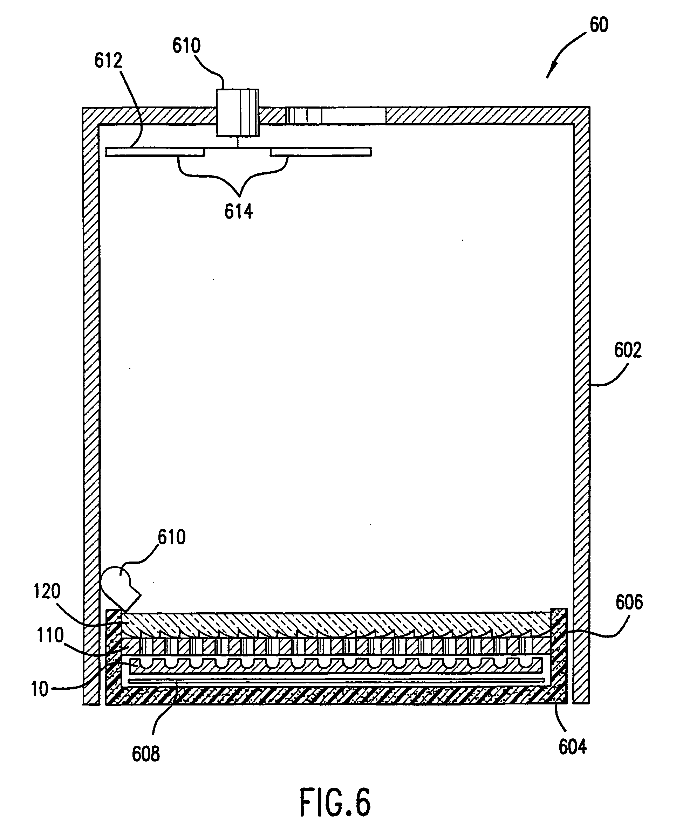

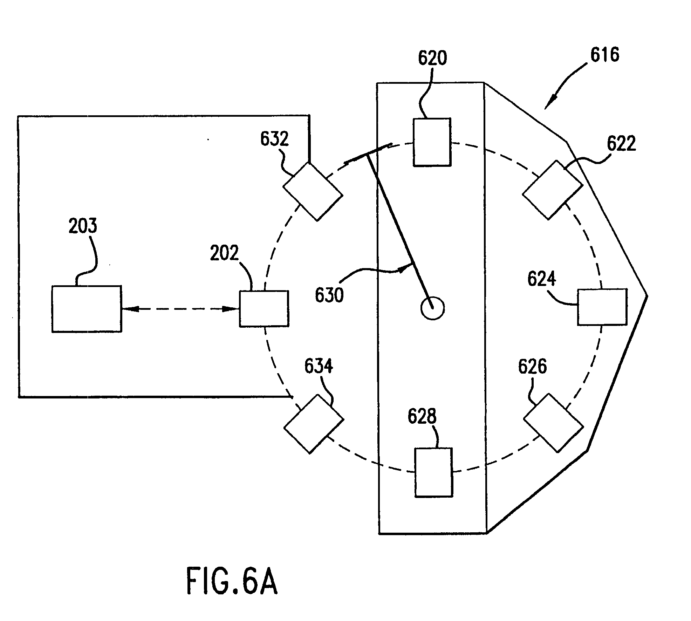

Optical chamber **60** is more fully illustrated in Figure 6. As shown, optical chamber **60** is bounded by optical housing **602** in which fits sample housing **604.** When a plate **10** is loaded into optical chamber **60,** the plate is secured in sample housing **604** which is positioned in registry with collimator **110,** over which is provided Fresnel lens **120.** While many luminescent assays can be provided at ambient temperatures, some require elevated temperatures. The luminometer of this device is provided with a sample chamber in which the sample housing **604** carries insulation **606** which, in a preferred embodiment is polyurethane foam, and heater element **608** to raise the temperature in the sample chamber **55** above ambient temperature, up to about 42 ° C.

There is a tendency, even at ambient conditions, for condensation to collect on the surface of the Fresnel lens **120**, as a result of moisture coming from the filled wells of plate **10.** The defogger **610** directs a stream of air heated just a few degrees, preferably about 2-3° degrees, above ambient conditions, or above the temperature of the chamber if the chamber is above ambient conditions, across the surface of the Fresnel lens **120,** effectively preventing condensation. Mounted at the top of the interior of optical chamber **60** is filter motor **610** which drives filter wheel **612,** on which may be mounted filters **614** of varying wavelength, for filtering undesirable wavelengths prior to imaging. Of course, a region is provided, indicated at **616,** in the optical housing **602** of the optical chamber **60** for light to be directed onto the CCD camera after passing through the filter **614.** The dimensions of optical chamber **60** are exaggerated in Figure 6 to illustrate the relationship between the optical chamber **60** and the filter wheel **612,** and defogger **610.** In practice, the filter is located inside the optical chamber **60,** and outside the sample housing **604** but alternate locations are possible while still achieving the desired function.

In Figure 6A, a plan view of a novel robotic mechanism **616** is displayed in a preferred embodiment of the present invention, which provides capacity for use in high throughput screening (HTS) applications. Referring to Figure 6A, the operation is as follows: robot plate stacks **620, 622, 624, 626,** and **628** each can be filled with multiple sample plates **10,** arranged in a vertical stack. In the preferred embodiment of Figure 6A, robot plate stack **628** is designated as the discard stack. The remaining robot plate stacks **620, 622, 624,** and **626** can be programmed in order of delivery by software controlled by processor **50** (not shown). In order to load or pick plates from any of these stacks, robot arm **630** moves vertically and rotationally to the desired robot plate stack, under control of the software programmed in processor **50.**

When commanded by processor **50,** transport 200 of the instrument will move the sample plate **10** from load position **202** to the Read position **203,** and return it to load position **202** when imaging is complete. In the embodiment of the invention shown in Figure 6A, the elapsed time between moving the sample plate **10** from load position **202** to the read position **203,** and returning it to load position **202** is typically 30-120 seconds, including imaging time.

Staging positions **632** and **634** are located at 45 degree positions relative to the position of robot arm **630.** In one embodiment, while imaging is in process, the robot arm **630** can place a sample plate **10** at staging position **632,** in preparation for placing the sample plate **10** in load position **202.** When the imaging is complete, the robot can move the read plate from load position **202** to staging position **634,** then load the plate from staging position **632** to load position **202,** and while the sample plate **10** is being imaged, the robot can move the plate from staging position **634** to the discard stack **628,** and place a new sample plate **10** at staging position **632.** In practice, the staging positions are at approximately the same level as the load position, so movement is very quick. In the preferred embodiment, the robot arm **630** can do the time consuming moves to any ofrobot plate stacks **620, 622, 624,** and **626** while imaging is going on, rather than in series with imaging.

With the staging positions **632** and **634,** the cycle time for a single sample plate **10** is 2 moves from/to staging areas (3 seconds each), plus 2 transport moves INIOUT to read position **203** (3 secondss each), plus the integration time (image exposure) time (typically 60 seconds), for a total cycle time of 72 seconds. Without using staging positions **632** and **634,** the time would be 2 moves to stacks (30 seconds each), plus 2 transports (3 seconds each), plus the integration time (typically 60 seconds) for a total of 126 seconds. As described in the preferred embodiment of the robotic mechanism **616,** the use of staging positions **632** and **634** decreases cycle time by 43%.

**Processing**

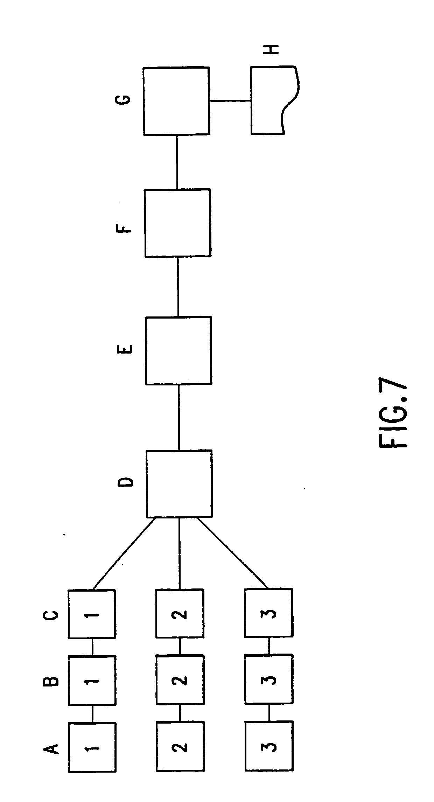

As set forth above, the mechanical and optical systems of the luminometer workstation of the invention are designed to provide precise, quantified luminescent values in an HTS environment, taking advantage of the use of a Fresnel lens/collimator assembly to permit single image viewing by the CCD camera, and subsequent analysis. The collimator, the lens and the camera together combine to reduce cross-talk experienced in prior art attempts. The signals obtained are further processed, as illustrated in Figure 7, through software loaded onto processor **50**, or other convenient method, to further refine the values obtained.

Prior to processing image data collected through the integrated mechanical and optical systems of the invention herein described, the integrated processing component of the invention must first control the mechanical alignment of those integrated mechanical and optical systems for reliable data collection. This process is conducted under control of the processor **50**. To conduct an alignment test, the luminescence detection of the present invention measures the light emitted from four test sample wells, called hot wells, of a test plate. In a preferred embodiment, the hot wells are located near each corner of the sample tray used for the alignment testing. The adjacent well crosstalk from each of the four hot wells is analyzed, and the values are compared. When the collimator is aligned precisely over the sample well tray, the crosstalk values will be symmetrical for the four hot wells. The software of the present invention flags any errors detected, such as incorrect number of test sample wells, incorrect intensity, or incorrect location. After the detection of no errors or after the correction of detected and flagged errors, the software of the present invention performs a symmetry calculation to determine precise alignment of the sample well tray, collimator, Fresnel lens and CCD camera assembly. In a known embodiment of the invention, known software techniques are employed to perform the symmetry calculation process by performing the following steps:

1. Extract the hot well and vertical and horizontal adjacent well intensities;
2. Calculate the averages of the horizontal and vertical adjacent well intensities separately for each hot well;
3. Calculate the differences between the actual adjacent intensity vs. the average for each of the horizontal and vertical directions;
4. Normalize the differences by the hot well intensity to convert to a percentage intensity value;
5. Find the worst case absolute value of the differences and display that as the overall misalignment;
6. Calculate the average X-direction (horizontal) misalignment by averaging the four adjacent wells to the right (horizontal direction) of the hot wells;
7. Calculate the average Y-direction (vertical) misalignment by averaging the four adjacent wells to the top (vertical direction) of the hot wells;
8. Calculate the rotational misalignment by averaging the left side hot well vertical adjacent wells at the top of the hot wells, and subtracting that from the average of the right side hot well vertical adjacent wells, thereby indicating any tilt in adjacent well values.

In step A, three actual images for each filter/emitter are taken. $A_1$ is a precursor image, $A_2$ is the full integration time image, and $A_3$ is post-cursor image. The precursor and post-cursor images are taken to avoid the problem of pixel saturation and to extend the detection dynamic range. The precursor and post-cursor images refer to reduced integration time images, which should not contain multiple saturated pixels. If more than six pixels of the full integration time image are saturated, the pre- and post-cursor images are averaged together to form the actual data for that well area. In the absence of six pixel saturation, the full integration time image is used.

In order to clearly isolate and read each pixel, in step B, each image is subjected to edge detection and masking, a processing step whereby the edge of each well or corresponding light image is identified, or annotated, to set off and clearly separate each well region of interest, as disclosed in U.S. Patent Application Serial No. 09/351,660, incorporated herein by reference. Again, edge detection and masking is performed for each of $B_1$, $B_2$ and $B_3$, referring to the pre-cursor, full integration time image and post-cursor images, respectively. The images are then subjected to "outlier" correction, correcting or "shaving" outliers and anomalies. In this process, the pixels within the region of interest are examined to identify "outliers"--those that are in gross disagreement with their neighbors, in terms of light intensity detected, and if the intensity of a given pixel or small pixel area is significantly different than neighboring pixels or pixel areas, then the average of the surrounding pixels or areas is used to replace erroneous data.. This can be due to random radiation, such as that caused by cosmic rays. In this process, this type of intensity is corrected.

Subsequently, in step C, each image $C_1$, $C_2$ and $C_3$ is subjected to dark subtraction, subtracting the dark background, so as to obtain average pixel values within each mask-defined region of interest. The subtraction is done on a well-by-well basis from stored libraries which are updated periodically.

Specifically, the dark subtraction is conducted to correct for the fact that even in the absence of light, CCD cameras can output low level pixel or bin values. This value includes the electronic bias voltage, which is invariant of position and integration time, and the "dark current," which may vary by position, and is proportional to integration time and to the temperature of the CCD. The CCD may also have faulty pixels that are always high level or saturated regardless of light input.

The processing software of the invention subtracts this background image or data from the real sample well image data in step C. As persons of ordinary skill in the relevant art will recognize, it is known to take a "dark" image immediately before or after a real image, imaging for the same integration time in both cases, and subtracting the "dark" image data from the real image data. In the preferred embodiment of the invention, "dark" image data is collected intermittently, preferably at specific time intervals. The initial "dark" image background data is collected at startup, and then typically at four hour intervals during image processing operations.

Because the background image has an integration time-invariant component and an integration time-variant component, data is collected for each sample well at minimum integration time and at maximum integration time, and a "slope/intercept" line is calculated between the two data points, using known data analysis techniques. This calculation permits data interpolation for any integration time between the minimum and maximum, and also permits data extrapolation for integration times below or beyond the minimum and maximum integration times.

In a preferred embodiment of the invention, a CCD camera is employed that has two separate "dark" current functions, caused by the CCD output amplifier. Operation of the amplifier generates heat and necessarily creates background "dark" image data. In the preferred embodiment, for integration times of less than 10 seconds, the amplifier operates continuously, whereas for integration times of more than 10 seconds, the amplifier remains off until immediately prior to the read operation. The "slope/intercept" line calculated for integration times of more than 10 seconds will then necessarily have a lower slope than a "slope/intercept" line calculated for integration times of less than 10 seconds. In step C, the processing software element allows separate collection and least squares regression for both the 0 to 10 second integration time region a processor 50, the "dark" background image data is stored separately for each individual AOI.

"Dark" current and bias can also vary over time. The processing software element corrects for this effect by comparing the integration time normalized (using the regression line technique described above) "dark reference" pixel values (outside the imaging field-described above), that were taken when the "dark" background images were taken, versus the "dark reference" pixel values taken while real sample well images are being taken. The difference between the values is then subtracted or added, as applicable, as a global number, to the "dark" background data. This corrects for bias drift and also for global CCD temperature drift.

As mentioned, all of the above "dark background" interpolation/subtraction of step C is done on a well by well basis.

At step D, if pixel saturation has occurred such that the average of the pre-cursor and post-cursor image must be used, the image data is multiplied by the reciprocal of the percentage represented by the pre-cursor images (e.g., 3%).

In step E, the well data is corrected for uniformity variations using a calibration file that is the reciprocal of the system response to a perfectly uniform input illumination.

In step F, the cross-talk correction is effected by processing the data as a whole and preparing a final image in much the same fashion as reconstruction of three dimensional images from a two dimensional data array is practiced.

Specifically in a preferred embodiment of step F, the impulse response function (IRF) is collected for all 96 wells of the 96 well plate type. This is done by filling one particular well in a given plate with a high intensity luminescent source, imaging the plate, and analyzing all of the wells in the plate for their response to the one high intensity well. The IRF is collected for all of the wells individually by repeating the process for every different well location desired for the complete data set. For 384 plate types, 96 sampling areas are selected, and data for the wells in between the selected sampled areas are interpolated in two dimensions. In the preferred embodiment, the 96 sampling areas comprise every second row and every second column, starting at the outside and working toward the center. Because in the 384 well plates the number of rows and columns is even, the two center rows and the two center columns are interpolated. The reflections in a 384 well plate are also modeled, and used to predict and interpolate reflections for the missing input data. Further in the preferred embodiment, all wells are normalized to the well with the highest intensity.

Subsequently in step F, the two-dimensional array of well IRF values for each well are "unfolded" into a one-dimensional column array, and the two-dimensional arrays of IRF values for other wells are added as subsequent columns, as shown in Chart 1 following:

Chart 1 - Unfolded Data Into Column 1

| IRF for A1 | IRF for B1 | IRF for C1 | |
|---|---|---|---|
| A1 | A1 | A1 | Etc |
| B1 | B1 | B1 | |
| C1 | C1 | C1 | |

Table continued

| IRF for A1 | IRF for B1 | IRF for C1 | |
|---|---|---|---|
| D1 | D1 | D1 | |
| E1 | E1 | E1 | |
| F1 | F1 | F1 | |
| G1 | G1 | G1 | |
| H1 | H1 | H1 | |
| A2 | A2 | A2 | |
| B2 | B2 | B2 | |
| C2 | C2 | C2 | |
| Etc | Etc | Etc | |

The unfolded matrix, which has the form of an N x N matrix, where N = the number of wells to be corrected, comprises a full characterization of the instrument crosstalk, including reflection factors. This unfolded matrix is then inverted, using known matrix inversion techniques, and used as a correction to matrix multiply a one-dimensional matrix unfolded from real assay data. This arithmetic process may be shown as matrix algebra:

$$[\text{true source distribution}] \times [\text{system IRF}] = [\text{instrument output}]$$

solving for [true source distribution] produces

$$[\text{true source distribution}] = \{1/[\text{system IRF}]\} \times [\text{instrument output}]$$

Subsequently, the calculated well intensities resulting from the above processing are calibrated to an absolute parameter of interest, such as the concentration of a known reporter enzyme. This calibration is conducted through a normalization process producing any of a variety of calibration curves, which will be familiar to those of ordinary skill in the relevant art.

In optional step G, the processed image information is subjected to any necessary post adjustment processing, for appropriate correlation with the materials tested. Specifically, in a preferred embodiment, the processing software of the present invention is capable of performing multi-component analysis. The basic problem is to calculate separately the concentration of a single reagent in a single sample containing other different reagents. Typically, the reagents used with the invention are formulated so as to emit over different, but perhaps overlapping, spectrums. As earlier described with respect to the integrated optical element, the first step of separating the light from multiple reagents is accomplished by optical bandpass filters, which are designed to maximize the sensitivity of the target reagent emission, while minimizing the sensitivity to other non-target reagent emission. In the present embodiment of the invention, there is one optical filter for each target reagent emission spectrum.

Since optical filters are interference devices, their bandpass characteristics vary, dependent on the angle of incidence of the emission to be filtered. The angle of incidence will be unique for each well because each well's specific location is unique relative to the optical filter. Accordingly, all calculations and filter coeficients must be unique per sample well. The multi-component calibration is performed as follows:

Prior to the real multiplexed (multiple reagent) samples, standards containing only a single reagent in each well are imaged and analyzed. These standards will produce a set of coefficients to be used collectively as multi-component coefficients for each optical filter, for each well. For a given optical filter, the target reagent for that filter should produce the highest output. The other reagents may also have spectra in the filter's bandpass, and will produce smaller outputs, which are a measure of the overlap of those nontarget reagent spectra into the filter signal. For example, the filter's output for the target reagent might be 850, and the filter's output for the other 2 reagents might be 100 and 50, respectively. If the 3 reagents were added together in a single well, the total output would be 1000, and the proportions would be 850:100:50. These coefficients are measured for each well location and filter separately, which gives a complete set of coefficients for simultaneous equations. This will allow a solution for any combination of concentrations of reagent in one sample well. Further in the preferred embodiment, these coefficients will also be normalized by the total intensity read in the "total emission" filter, so that the calculation will result in the same intensity as the instrument would measure if only a single reagent was measured by the "total emission" filter. This calculation may be shown as follows for a simple case of blue and green reagents (abbreviated as R in the calculations), and blue and green and total emission filters (abbreviated as F in the calculations):

Let A = (output of the instrument for blue R thru the blue F) / (output of instrument for blue R thru total emission F);

Let B = (output of the instrument for green R thru the blue F) / (output of instrument for green R thru total emission F);

Let C = (output of the instrument for blue R thru the green F) / (output of instrument for blue R thru total emission F);

Let D = (output of the instrument for green R thru the green F) / (output of instrument for green R thru total emission F);

These coefficients are measured for each well prior to running a multi-color run.
Then for a multi-reagent/color run,

(output of the instrument for the blue F) = A x (true intensity of blue R) + B x (intensity of green R);

and

(output of the instrument for the green F) = C x (true intensity of blue R) + D x (intensity of green R)

These 2 simultaneous equations are then solved for the true intensity of the blue and green reagents by the processing software, under control of processor **50**.
Further in step G, the raw output of the instrument for each filter is normalized for integration time before solving the equations.
The resulting intensities could then be calibrated as concentration by use of standards as described in the previous section.
Finally, in step H, the analyzed data is presented in a user-acceptable format, again controlled by processor **50**.
The invention may be further understood by reference to examples of assays practiced in HTS format, demonstrating the dynamic range and flexibility of the NorthStar™ luminometer.

## EXAMPLES

### Example 1 - Purified cAMP Quantitation

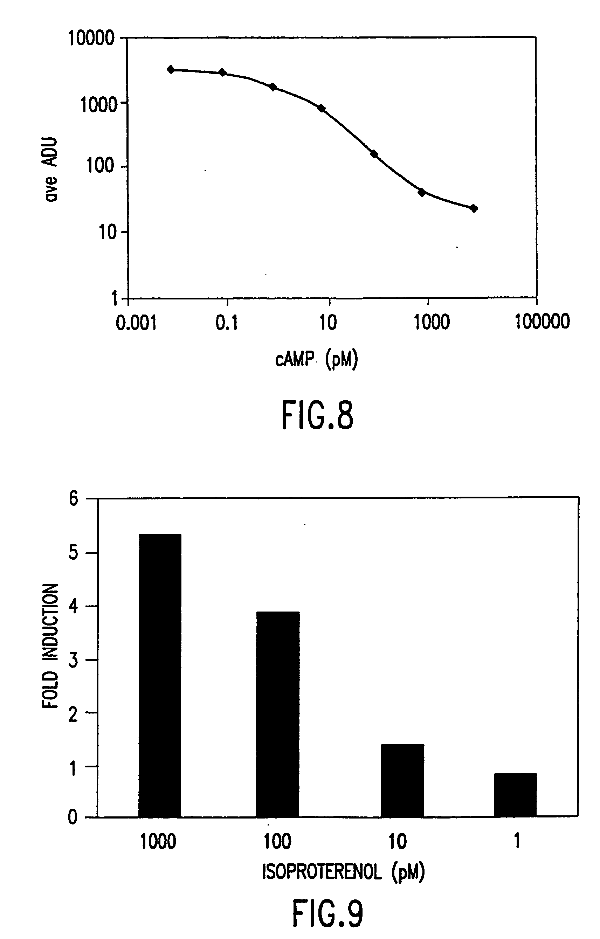

cAMP standards were serial diluted and added to a 96-well assay plate with alkaline phosphatase conjugated cAMP and anti-cAMP. Plates were processed with the cAMP-Screen™ protocol and imaged for 1 minute on the North-Star™ 30 minutes after addition of CSPD®/Sapphire-II™. A sensitivity of 0.06 pM of purified cAMP is achieved with cAMP-Screen™ on the NorthStar™ workstation. The results are depicted in Figure 8.

### Example 2 - cAMP Induction in Adrenergic β2 Receptor-expressing C2 Cells

Adrenergic β2 Receptor-expressing C2 cells were plated in a 96-well plate (10,000 cells/well) and stimulated with isoproterenol for 10 minutes. cAMP production was quantitated in cell lysates using the cAMP-Screen™ assay. The assay plate was imaged for 1 minute on the NorthStar™, 30 minutes after addition of CSPD®/Sapphire-II™. Increasing cAMP levels were detected on the NorthStar™ from the stimulated adrenergic receptor. The results are depicted in Figure 9.

### Example 3 - Luc-Screen™ Reporter Gene Assay in 96-,384- and 1,536-well Format

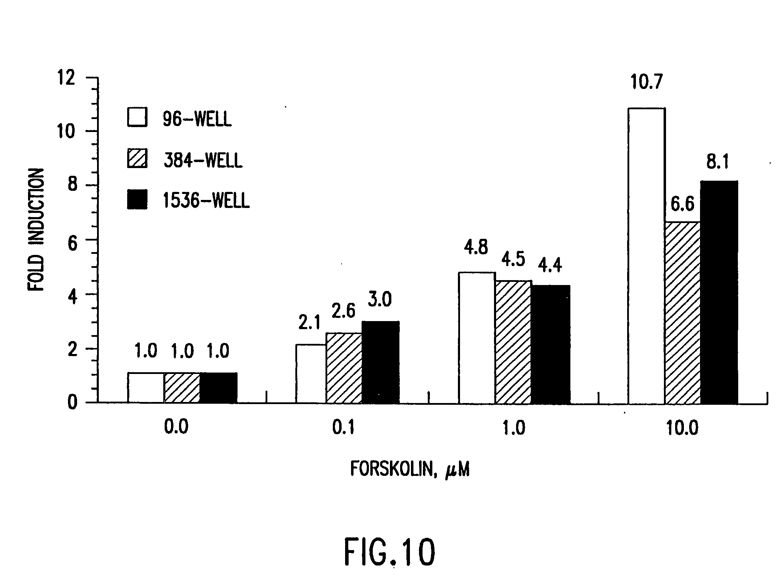

pCRE-Luc-Transfected cells were seeded in 96-, 384- and 1,536-well plates, incubated for 20 hours with forskolin, and assayed with the Luc-Screen™ system. PCRE-Luc contains the luciferase reporter gene under the control of a cAMP response element (CRE). Forskolin induces intracellular cAMP production through the irreversible activation of adenylate cyclase. All plate formats demonstrate comparable forskolin-induced cAMP levels. The results are depicted in Figure 10.

### Example 4 - Forskolin Induction of pCRE-Luc Transfected NIH-3T3 Cells

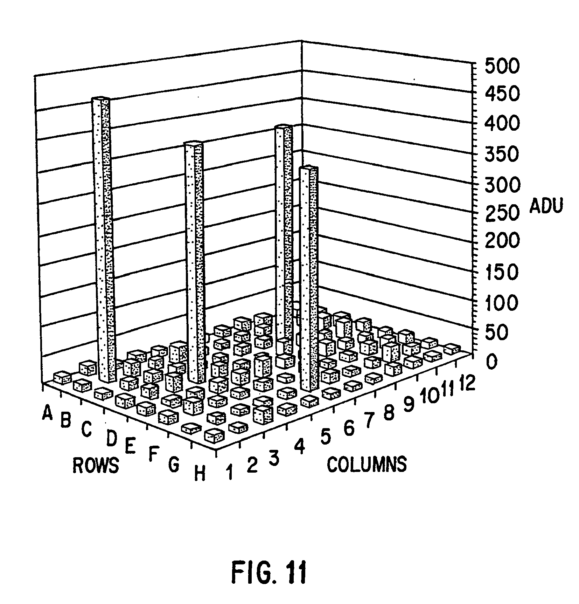

pCRE-Luc-Transfected cells were seeded in a 96-well plate. Four random wells were induced for 17 hours with 1 mM forskolin and the entire plate was assayed with the Luc-Screen™ system. The results are shown in Figure 11.

### Example 5 - Dual-Light® Quantitation of Luciferase & β-galactosidase Reporter Enzymes

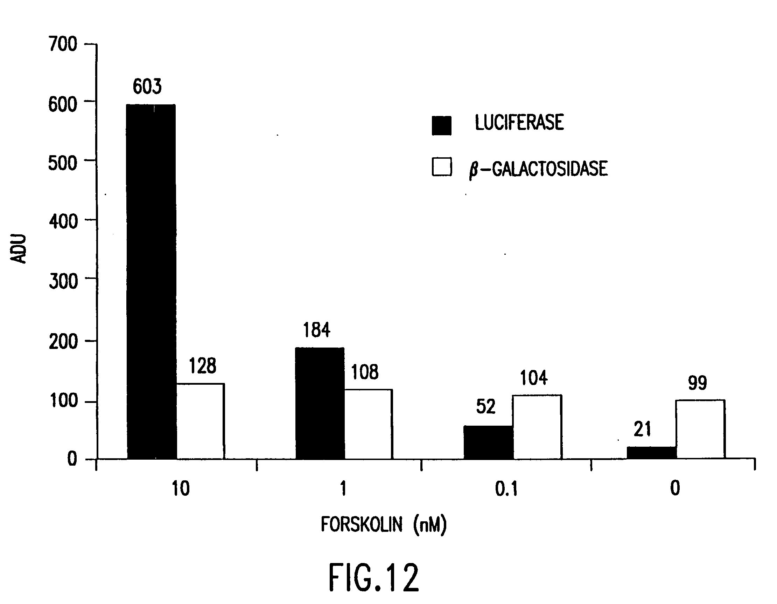

NIH/3T3 cells were co-transfected with pCRE-Luc and pβgal-Control, and seeded into a 96-well microplate (2 x $10^4$ cells/well). Cells were incubated with forskolin for 17 hours. Modified Dual-Light® Buffer A was added to cells and incubated for 10 minutes. Modified Dual Light® Buffer B was injected and luciferase-catalyzed light emission was measured immediately. Thirty minutes later, Accelerator-II was added, and then β-galactosidase-catalyzed light emission was quantitated on the NorthStar™ HTS workstation. Quantitation is shown graphically in Figure 12.

### Example 6 - Normalized Fold Induction of Luciferase Reporter

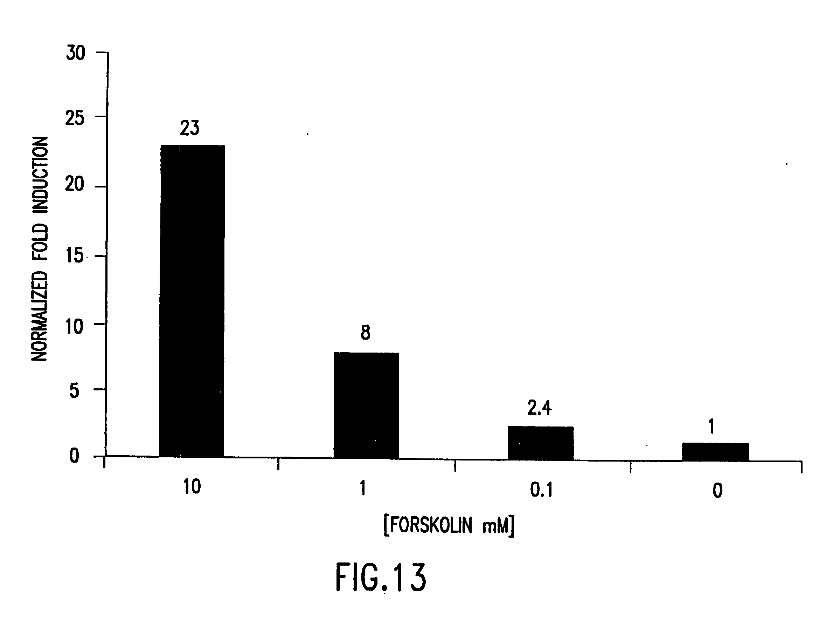

Fold induction of luciferase activity was calculated following normalization to β-galactosidase activity. The Dual-Light® assay enables the use of a control reporter for normalization, or to monitor non-specific effects on gene expression. This is depicted in Figure 13.

### Example 7 - Effect of BAPTA-AM on Antagonist Activity

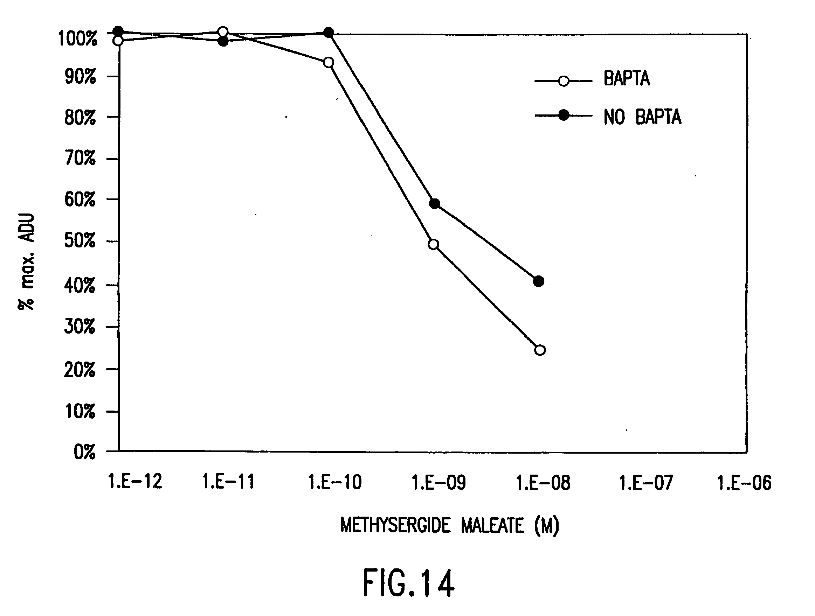

CHO-Aeq-5HT2B cells were loaded with coelenterazine h +/- 0.5 μM BAPTA-AM for 4 hours. The antagonist methysergide was added to the charged cells for 30 minutes. 1 μM agonist a-Me-5HT was injected, and the emitted light was integrated for 20 seconds on the NorthStar™ system. The reported IC50 for methysergide (0.6 nM) is unchanged in the presence of BAPTA-AM. The data obtained appears in Figure 14.

### Example 8 - Effect of BAPTA-AM on Peptide Agonist Stimulated of the Orexin 2 Receptor

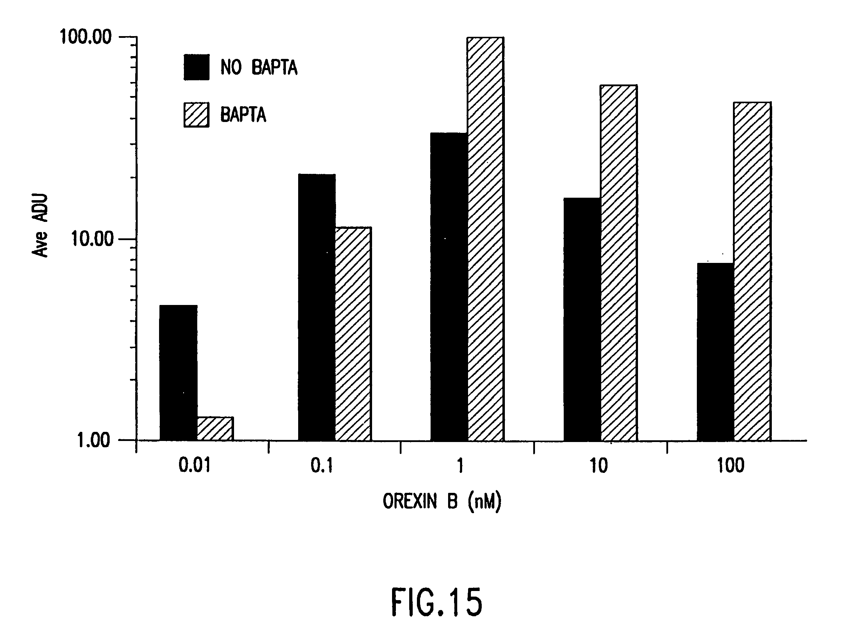

CHO-Aeq-OX2-A2 cells (Euroscreen) were loaded with coelenterazine h +/- 0.6 μM BAPTA-AM for 4 hours. The peptide agonist Orexin B was injected into the wells, and the emitted light was integrated for 20 seconds on the NorthStar™. Using this assay on the NorthStar™ system, the reported EC50 for Orexin B (0.75 nM) is unchanged in the presence of BAPTA-AM. This is shown in Figure 15.

This invention has been described generically, by reference to specific embodiments and by example. Unless so indicated, no embodiment or example is intended to be limiting. Alternatives will occur to those of ordinary skill in the art without the exercise of inventive skill, and within the scope of the claims set forth below.

**Claims**

1. A method for detecting and quantifying light emissions from samples in multiple wells, the method comprising:

    filtering light emitted by the samples prior to reaching an imaging device;
    focusing the image of the samples onto the imaging device;
    identifying the edge of each well in the image, determining the dark background for each well in the image, and determining whether pixel saturation has occurred; and
    correcting the image for uniformity variations.

2. The method of claim 1 wherein the imaging device is a charge coupled device (CCD).

3. The method of claim 2, further comprising:

    identifying outlier pixels in the image that have intensities significantly different than neighbouring pixels; and
    replacing intensity data for the outlier pixels with the average intensity of the neighbouring pixels.

4. The method of claim 2, further comprising:

    subtracting the dark background from the image data.

5. The method of claim 4, wherein correcting the image for uniformity variations comprises using a calibration file that is the reciprocal of the system response to a perfectly uniform input illumination.

6. The method of claim 2, wherein:

    pre-cursor, post-cursor, and full integration time images are taken, wherein the pre-cursor and post-cursor images are reduced integration time images.

7. The method of claim 6, further comprising averaging the pre- and post-cursor images to form the actual data for a well area if more than six pixels of the full integration time image are saturated; and in the absence of six pixel saturation, using the full integration time image.

8. The method of claim 1, wherein filtering comprises filtering infrared emissions.

9. The method of claim 1, further comprising collimating light emitted by the samples.

10. The method of claim 1, wherein focusing comprises focusing light emitted by the samples with a first lens.

11. The method of claim 10, wherein the first lens is a Fresnel lens.

12. The method of claim 10, wherein focusing further comprises focusing light emitted by the samples with a second lens after focusing with the first lens.

13. The method of claim 12, wherein the second lens is a camera lens.

14. The method of claim 12, wherein the first lens is a Fresnel lens and the second lens is a camera lens.

15. The method of claim 10, further comprising collimating light emitted by the samples after focusing with the first lens.

16. The method of claim 12, further comprising collimating light emitted by the samples after focusing with the first lens and before focusing with the second lens.

17. The method of claim 16, wherein the first lens is a Fresnel lens and the second lens is a camera lens.

**18.** A method for detecting light emitted from biological samples in wells, the method comprising:

filtering light emitted by the samples prior to reaching a detector;
focusing light emitted by the samples onto the detector to form well images;
for each of a plurality of well images, determining the edge of the well image on the detector, determining dark current within the well image, and determining pixel saturation within the well image; and
calibrating for spectral uniformity between images for different wells.

**19.** The method of claim 18, wherein the detector is a charge coupled device (CCD).

**20.** The method of claim 19, further comprising:

identifying outlier pixels in a well image that have intensities significantly different than neighbouring pixels;
averaging the intensity of the neighbouring pixels; and
replacing the intensity data for the outlier pixels with the average intensity of the neighbouring pixels.

**21.** The method of claim 19, further comprising:

subtracting the dark current within the well image from the well image data.

**22.** The method of claim 21, wherein calibrating for spectral uniformity between images for different wells comprises:

generating data on the CCD using uniform input illumination; and
calibrating the image data using the reciprocal of the uniform input illumination data.

**23.** The method of claim 19, wherein:

a first image of the well is taken at a first integration time;
a second image of the well is taken at a second integration time greater than the first integration time; and
a third image of the well is taken at a third integration time less than the second integration time.

**24.** The method of claim 23, further comprising:

determining the number of saturated pixels in the second image;
using data from the second image as the image data for the well if the number of saturated pixels is less than or equal to a predetermined value; and
averaging the data from the first and third images and using the averaged data as the image data for the well if the number of saturated pixels exceeds the predetermined value.

FIG.1

FIG.2

FIG.3

FIG. 4

512   512

514

510

508

506

502

504

FIG. 5

FIG.6

FIG.6A

FIG.7

FIG.8

FIG.9

FIG.10

FIG. 11

FIG.12

FIG.13

EP 1 617 207 A2

FIG.14

EP 1 617 207 A2

FIG.15

EP 1 617 207 A2